# EUROPEAN PATENT APPLICATION

(11) **EP 4 145 881 A1**
(43) Date of publication of application: **08.03.2023**
(21) Application number: 21796408.9
(22) Date of filing: 26.04.2021
(51) Int. Cl.: H04W 16/32, H04W 72/04, H04W 4/029, H04W 4/30, H04W 76/15, G07B 15/00

(54) **WIRELESS TERMINAL, CENTER SERVER DEVICE, AND METHOD THEREFOR**

(30) Priority: 27.04.2020 JP 2020078447
(71) Applicant: NEC Corporation, 108-8001 Tokyo (JP)
(72) Inventor: TAMURA, Toshiyuki, Tokyo 108-8001 (JP); OKABE, Junya, Tokyo 108-0073 (JP); CHIBA, Kazuhiro, Tokyo 108-0073 (JP); SHIMIZU, Kouji, Tokyo 108-0073 (JP); NAKAGAWA, Tomoki, Tokyo 108-0073 (JP); AOKI, Takahiro, Tokyo 108-0073 (JP)
(74) Representative: MacDougall, Alan John Shaw
(86) International application number: PCT/JP2021/016679
(87) International publication number: WO 2021/221021

(57) **Abstract**

A radio terminal (1) determines that the radio terminal (1) is approaching a first station (5), receives from a center server (4) a cell identifier of a first cell corresponding to an entrance gate function (53) of the first station (5), and transmit a message containing the cell identifier to a cellular communication network. The message causes the network to add the first cell (54) as a secondary cell in dual connectivity for the radio terminal (1), enabling the radio terminal (1) to communicate with the entrance gate function (53) via a user plane path including a radio connection of the first cell (54). The radio terminal (1) then communicates with the entrance gate function (53) via the user plane path. This contributes, for example, to reducing latency required to transmit or receive user data in a narrow coverage cell when a radio terminal receives a signal from that cell.

## Description

### Technical Field

This disclosure relates to automatic ticket gates.

### Background Art

Patent Literature 1 discloses a system for detecting boarding and alighting stations of rail users and calculating train fares. Specifically, a radio terminal (e.g., a cell phone) of a rail user communicates with an entry detection device installed at a boarding station via short-range wireless communication with a communication area of a few meters. The entry detection device is installed at an entrance corridor through which users enter the station, and communicates with radio terminals owned by users who are passing through the entrance corridor. The entry detection device detects users entering the station and transmits entry confirmation information per user to a center server via a station server. Similarly, a radio terminal owned by a rail user communicates with an exit detection device installed at an alighting station via short-range wireless communication with a communication area of a few meters. The exit detection device is installed at the exit corridor through which users leave the station, and communicates with radio terminals owned by users who are passing through the exit corridor. The exit detection device detects users leaving the station and transmits exit confirmation information per user to the center server via a station server. The center server receives various information via station servers, calculates and corrects fares for each user.

Patent Literature 2 discloses a system for detecting a user's passing through a gate. In the system disclosed in Patent Literature 2, one or more simplified radio base stations are placed at a gate such as a station ticket gate. Each simplified radio base station forms a small radio communication area with a radius of a few meters. In one example, multiple simplified radio base stations are deployed along a path of users and form different tracking areas along the path of users. The system communicates with user's radio terminals through these radio communication areas (tracking areas) and thereby detects the passage of the users through the gate.

Patent Literature 3 discloses a system for detecting passage through a gate. In the system shown in Patent Literature 3, a wireless access point is installed in an area in front of an entrance (or exit) gate. The wireless access point scans multiple sections of the entrance area with an electromagnetic wave beam in sequence, communicates with a mobile terminal via the electromagnetic wave beam, and receives admission ticket information from the mobile terminal.

Patent Literature 4 discloses a system for managing transportation expenses. In the system of Patent Literature 4, a radio terminal has Global Positioning System (GPS) functionality and transmits the current position of the radio terminal to a server in response to the user's operation of a "get on" or "get off" button through an interface provided by an application. The server identifies the boarding station or the alighting station based on the current position of the terminal and sends the identification result to the radio terminal. The radio terminal periodically sends its location information to the server from the time the "get on" button is selected until the "get off" button is selected. The server detects the user's travel route based on the location information periodically received from the radio terminal. The server calculates the fare based on the determination results of the boarding and alighting stations, and the travel route.

### Citation List

### Patent Literature

[Patent Literature 1] JP 2009-199290 A
[Patent Literature 2] JP 2019-097035 A
[Patent Literature 3] JP 2014-182554 A
[Patent Literature 4] JP 2005-100023 A

### Summary of Invention

### Technical Problem

The inventors have considered automatic ticket gate systems using cellular communication technologies such as LTE and 5G systems. In some implementations, a radio base station installed in a train station forms a cell with narrow coverage, and the cell is used to detect a user's gate passage. In this case, in order to reliably process or record the user's gate passage, the system needs to communicate reliably with the radio terminal via the cell associated with the gate in a short period of time. For this purpose, it is desirable to be able to reduce the latency required for the radio terminal to transmit or receive user data in the cell with narrow coverage when the radio terminal is able to receive a signal from that cell.

Patent Literature 1-3 propose the use of cellular communication (e.g., Long Term Evolution (LTE) communication) between a radio base station and a mobile radio terminal for gates such as station ticket gates, instead of radio frequency identifier (RFID) technology such as contactless integrated circuit (IC) cards (typical communication distance is about 10 cm). However, Patent Literature 1-3 do not provide solutions to the above-mentioned issue. Patent Literature 4 also does not provide a solution to the above-mentioned problem.

One of the objects to be attained by embodiments disclosed herein is to provide apparatuses, methods, and programs that contribute to reducing the latency required to transmit or receive user data in a cell having narrow coverage when a radio terminal is able to receive a signal in that cell. It should be noted that this object is merely one of the objects to be attained by the embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to determine that the radio terminal is approaching a first station, receive from a center server a first cell identifier representing a first cell corresponding to an entrance gate function of the first station, and transmit a first message containing the first cell identifier to a cellular communication network. The first message causes the cellular communication network to add the first cell as a secondary cell in dual connectivity for the radio terminal, to enable the radio terminal to communicate with the entrance gate function via a first user plane path that includes a radio connection of the first cell. The at least one processor is further configured to communicate with the entrance gate function via the first user plane path.

In a second aspect, a center server apparatus includes at least one memory and at least one processor coupled to the at least one memory. The at least one processor is configured to determine that a radio terminal is approaching a first station. The at least one processor is configured to send a first message to a cellular communication network in response to the determination that the radio terminal is approaching the first station. The first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell. The at least one processor is further configured to receive, from a first station server function associated with the first station, a first data set generated based on communication between the radio terminal and the entrance gate function via the first user plane path.

In a third aspect, a method performed by a radio terminal includes the steps of:
(a) determining that the radio terminal is approaching a first station:
(b) receiving from a center server a first cell identifier representing a first cell corresponding to an entrance gate function of the first station;
(c) transmitting a first message containing the first cell identifier to a cellular communication network, wherein the first message causes the cellular communication network to add the first cell as a secondary cell in dual connectivity for the radio terminal, to enable the radio terminal to communicate with the entrance gate function via a first user plane path that includes a radio connection of the first cell; and
(d) communicating with the entrance gate function via the first user plane path.

In a third aspect, a method performed by a radio terminal includes the steps of:
(a) determining that a radio terminal is approaching a first station;
(b) sending a first message to a cellular communication network in response to the determination that the radio terminal is approaching the first station, wherein the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell; and
(c) receiving, from a first station server function associated with the first station, a first data set generated based on communication between the radio terminal and the entrance gate function via the first user plane path.

### Advantageous Effects of Invention

According to the above-described aspects, it is possible to provide apparatuses, methods, and programs that contribute to reducing the latency required to transmit or receive user data in a cell having narrow coverage when a radio terminal is able to receive a signal in that cell.

### Brief Description of Drawings

Figure 1 shows a configuration example of an automatic ticket gate system according to an embodiment;
Figure 2 shows a configuration example of an automatic ticket gate system according to an embodiment;
Figure 3 shows a flowchart showing an example of operation of a radio terminal according to an embodiment;
Figure 4 is a sequence diagram showing an example of signaling according to an embodiment;
Figure 5A shows an example of a user plane path before dual connectivity is performed;
Figure 5B shows an example of a user plane path after dual connectivity is initiated;
Figure 5C shows an example of a user plane path after dual connectivity is initiated;
Figure 6 shows a flowchart showing an example of operation of a radio terminal according to an embodiment;
Figure 7 shows a flowchart showing an example of operation of a radio terminal according to an embodiment;
Figure 8 shows a flowchart showing an example of operation of a center server according to an embodiment;
Figure 9 is a sequence diagram showing an example of signaling according to an embodiment;
Figure 10 is a sequence diagram showing an example of signaling according to an embodiment;
Figure 11 shows an example of a user plane path after dual connectivity is initiated;
Figure 12 shows a flowchart showing an example of operation of a center server according to an embodiment;
Figure 13 is a block diagram showing a configuration example of a base station according to an embodiment;
Figure 14 is a block diagram showing a configuration example of a radio terminal according to an embodiment; and
Figure 15 is a block diagram showing a configuration example of an application function according to an embodiment.

### Example Embodiment

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3rd Generation Partnership Project (3GPP) fifth generation mobile communication system (5G system (5GS)). However, these embodiments may be applied to other radio communication systems (e.g., LTE systems, or Wireless Local Area Network (WLAN) systems compliant with the IEEE802.11 series).

### First Embodiment

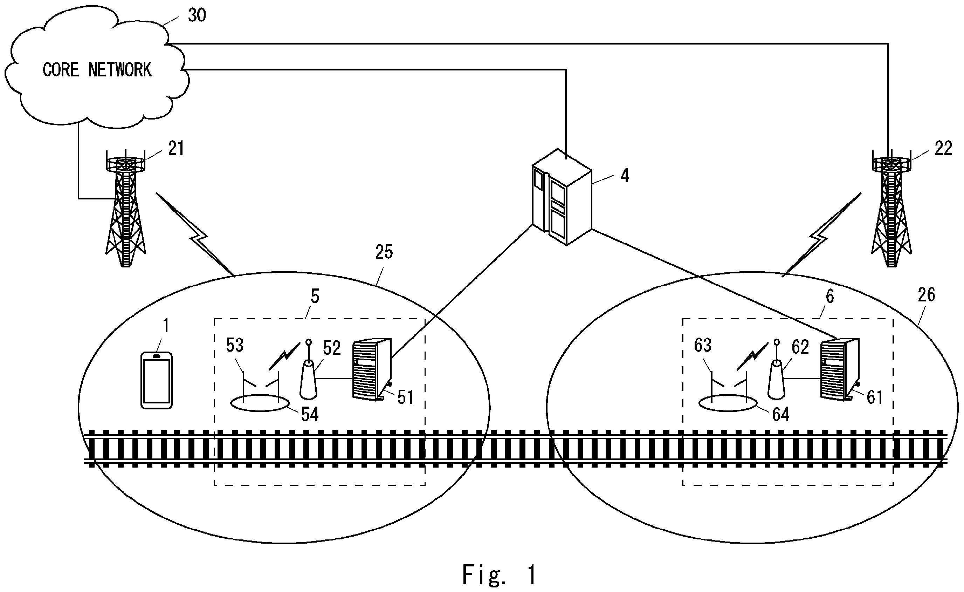

Figure 1 shows an example of a configuration of an automatic ticket gate system according to embodiments, including this embodiment. The automatic ticket gate system collects information on users passing through an entrance gate (entrance ticket gate) and an exit gate (exit ticket gate) of a train station. A radio terminal 1 (hereinafter referred to as User Equipment (UE)) is brought by a rail user, has cellular communication (e.g., LTE communication, 5G communication) capability, and executes an application program for rail use. The application program for rail use is stored in a memory of the UE 1 and runs on a processor of the UE 1.

The automatic ticket gate system includes facilities located at a station 5, facilities located at a station 6, and a center server 4. In the following, it is assumed that the station 5 and the station 6 are the boarding station and the alighting station of the rail user having the UE 1.

The facilities in the boarding station 5 include a station server 51, a base station 52, and an entrance gate 53. The station server 51 is communicatively connected to the center server 4. In addition, the station server 51 is communicatively connected to the entrance gate 53. The entrance gate 53 is connected to the base station 52 and can communicate with the UE 1 via the base station 52 and a cell 54 provided by the base station 52. The base station 52 may be physically integrated with the entrance gate 53. The station server 51 may control the entrance gate 53 based on communication with the UE 1.

The base station 52 is communicatively connected to the entrance gate 53 and forms the cell 54 associated with the entrance gate 53. The cell 54 may provide cell coverage to the location of the entrance gate 53. Additionally or alternatively, the cell 54 may provide cell coverage to the area in front of the entrance gate 53 through which users approaching the entrance gate 53 pass. Additionally or alternatively, the cell 54 may provide cell coverage to the area behind the entrance gate 53 through which users pass after passing through the entrance gate 53. The base station 52 may form the cell 54 by one or more beams, whereby the cell 54 may provide multiple separate coverage areas at the respective locations of multiple entrance gates 53.

The 5G system supports millimeter wave frequency bands from 4.25 GHz to 52.6 GHz, in addition to the frequency bands at sub-6 GHz, which have also been used in LTE. The sub-6 GHz frequency bands are called Frequency Range 1 (FR1), while the millimeter wave frequency bands are called Frequency Range 2 (FR2). In some implementations, the cell 54 associated with the entrance gate 53 may operate in an FR2 band. Alternatively, the cell 54 may operate in an unlicensed frequency band (NR unlicensed band) (e.g., 60 GHz band).

The entrance gate 53 communicates with the UE 1 via the base station 52 and cell 54 and sends a notification to the station server 51 indicating the entrance of the user of the UE 1. In response to the notification, the station server 51 generates a data set indicating that the user of the UE 1 has passed through the entrance gate 53 of the boarding station 5. In other words, the station server 51 generates a dataset indicating the entrance of the user based on the communication between the UE 1 and the entrance gate 53 via a UP path including a radio connection in the cell 54. The station server 51 sends the generated dataset to the center server 4. The center server 4 manages the entrance gate passage of the user of the UE 1 based on the dataset.

As described below, the user's passage through the entrance gate is managed by application layer communication between the UE 1 and the station server 51 via the cell 54 and the base station 52. Accordingly, a physical gate does not necessarily need to be provided. In this case, the entrance gate 53 may only be a computer system communicatively connected to both the base station 52 and station server 51. A computer system providing part or all of the functions of the entrance gate 53 may be physically integrated with a computer system providing at least part of the functions of the base station 52 (e.g., gNB-Central Unit (gNB-CU)). Additionally or alternatively, a computer system providing part or all of the functions of the entrance gate 53 may be physically integrated with a computer system providing part or all of the functions of the station server 51.

The facilities of the alighting station 6 include a station server 61, a base station 62, and an exit gate 63. The station server 61 is communicatively connected to the center server 4. In addition, the station server 61 is communicatively connected to the exit gate 63. The exit gate 63 is connected to the base station 62 and can communicate with the UE 1 via the base station 62 and the cell 64 provided by the base station 62. The base station 62 may be physically integrated with the exit gate 63. The station server 61 may control the exit gate 63 based on communication with the UE 1.

The base station 62 is communicatively connected to the exit gate 63 and forms a cell 64 associated with the exit gate 63. The cell 54 may provide cell coverage to the location of the exit gate 63. Additionally or alternatively, the cell 64 may provide cell coverage to the area in front of the exit gate 63 through which users approaching the exit gate 63 pass. Additionally or alternatively, the cell 64 may provide cell coverage to the area behind the exit gate 63 through which users pass after passing through the exit gate 63.
The base station 62 may form the cell 64 by one or more beams, whereby the cell 64 may provide multiple separate coverage areas at the respective locations of multiple exit gate 63. Similar to the cell 54 described above, the cell 64 may operate in an FR2 band or in an unlicensed frequency band (e.g., 60 GHz band).

The exit gate 63 communicates with the UE 1 via the base station 62 and cell 64 and sends a notification to the station server 61 indicating the exit of the user of the UE 1. In response to the notification, the station server 61 generates a data set indicating that the user of the UE 1 has passed through the exit gate 63 at the alighting station 6. In other words, the station server 61 generates a dataset indicating the user's exit based on the communication between the UE 1 and the exit gate 63 via a UP path including a radio connection in the cell 64. The station server 61 sends the generated dataset to the center server 4. The center server 4 manages the exit gate passage of the user of the UE 1 based on the said data set.

As described below, the user's passage through the exit gate is managed by application layer communication between the UE 1 and the station server 61 via the cell 64 and the base station 62. Accordingly, a physical gate does not necessarily need to be provided. In this case, the exit gate 63 may only be a computer system communicatively connected to both the base station 62 and station server 61. A computer system providing part or all of the functions of the exit gate 63 may be physically integrated with a computer system providing at least part of the functions of the base station 62 (e.g., gNB-CU)). Additionally or alternatively, a computer system providing part or all of the functions of the exit gate 63 may be physically integrated with a computer system providing functions of the station server 61.

Edge computing technology can be used to enable communications between the UE 1 and the entrance gate 53 and between the UE 1 and the exit gate 63. An application platform and associated Application Programming Interfaces (APIs) for edge computing defined, for example, by the European Telecommunications Standards Institute (ETSI) Industry Specification Group (SG) called Multi-access Edge Computing (MEC). Meanwhile, the 3GPP specifies various tools (or features) that can be used to provide a UP path suitable for edge computing. Specifically, the main tools for UP path management suitable for edge computing include user plane (function) (re)selection, Local Routing and Traffic Steering, Session and Service Continuity (SSC), Support of Local Area Data Network (LADN), and Application Function (AF) influence on traffic routing.

Each of the base stations 52 and 62 may contain a remote radio unit (RRU) and a baseband unit (BBU). The RRU may be referred to as Remote Radio Head (RRH), Radio Equipment (RE), Radio Unit (RU), or by other names. The BBU may be referred to as Radio Equipment Controller (REC), Data Unit (DU), Distributed Unit (DU), Central Unit (CU), or by other names. The RRU is connected to an antenna array and performs Physical (PHY) layer analog signal processing. The RRU and the BBU are connected via a Common Public Radio Interface (CPRI) interface using, for example, an optical fiber. The BBU performs baseband digital signal processing and provides RAN control plane functions (e.g., Radio Resource Control (RRC)). The BBU may include a gNB-DU and a gNB-CU in a 5G system.

In addition, the BBU may be implemented as a RAN node virtualized on top of a computer system (RAN Virtualized Network Functions (VNFs)). In this case, the BBU of the base station 52 may be implemented on the same general purpose hardware platform as part or all of the functions of the entrance gate 53. Additionally or alternatively, the BBU of the base station 52 may be implemented on the same general-purpose hardware platform as part or all of the functions of the station server 51. Similarly, the BBU of the base station 62 may be implemented on the same general-purpose hardware platform as part or all of the functions of the exit gate 63. Additionally or alternatively, the BBU of base station 62 may be implemented on the same general-purpose hardware platform as part or all of the functions of the station server 61.

In the example shown in Figure 1, base stations 21 and 22 form cells (e.g., macrocells) 25 and 26, respectively. The cell 25 provides coverage to a geographic area including the boarding station 5, while the cell 26 provides coverage to a geographic area including the alighting station 6. Accordingly, when the UE 1 is located at or near the boarding station 5, the UE 1 can communicate with the center server 4 through the cell 25, the base station 21, and a core network (5G Core Network (5GC)) 30. Similarly, when the UE 1 is located at or near the alighting station 6, the UE 1 can communicate with the center server 4 through the cell 26, the base station 22, and the 5GC 30.

The center server 4 communicates with the station servers 51 and 61 to manage rail user boarding and alighting. Furthermore, when the radio terminal 1 is located near the boarding station 5, the center server 4 communicates with the radio terminal 1 via the core network 30 and the base station 21 and cell 25. Similarly, when the radio terminal 1 is located near the alighting station 6, the center server 4 communicates with the radio terminal 1 via the core network 30, the base station 22 and the cell 26.

In some implementations, the facilities at the boarding station 5, the facilities at the alighting station 6, and the center server 4 are operated by a railway operator, while the base stations 21 and 22 and the core network 30 are operated by a mobile network operator (MNO).

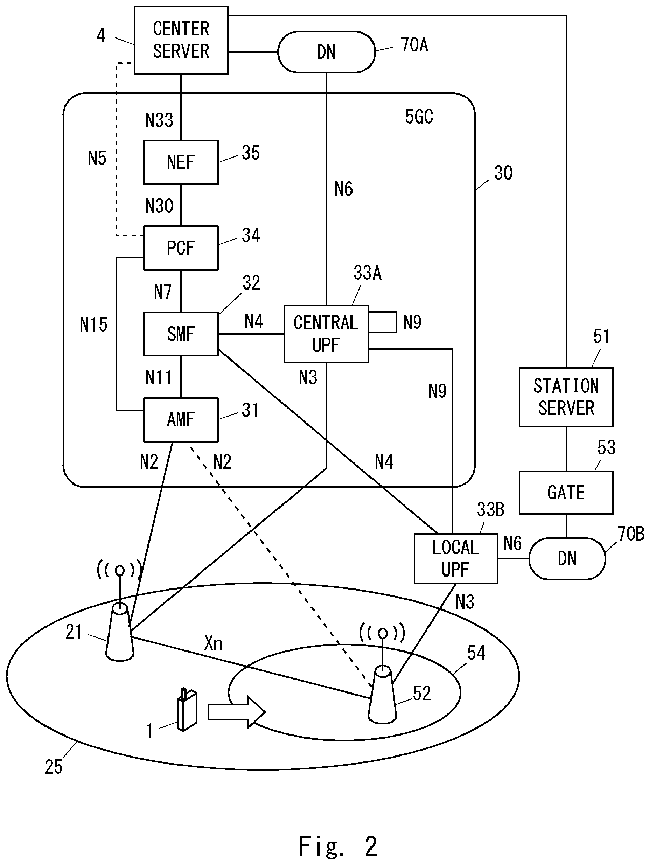

Figure 2 shows a configuration example of a cellular communication network (i.e., 5GS) related to the automatic ticket gate system in this embodiment. Each of the elements shown in Figure 2 is a network function and provides an interface as defined by the 3rd Generation Partnership Project (3GPP). Each of the elements (network functions) shown in Figure 2 can be implemented, for example, as a network element on dedicated hardware, as a software instance running on dedicated hardware, or as a virtual function instantiated on an application platform.

The cellular network shown in Figure 2 may be provided by a Mobile Network Operator (MNO), or it may be a Non-Public Network (NPN) provided by a non-MNO. If the cellular network shown in Figure 2 is an NPN, it may be an independent network, represented as a Stand-alone Non-Public Network (SNPN), or it may be an NPN linked to an MNO network, represented as a public network integrated NPN.

For the sake of brevity, Figure 2 omits the description of elements related to the alighting station 6. Thus, in the example of Figure 2, the cellular communication network includes the base station 21, base station 52, 5GC 30, center server 4, station server 51, and entrance gate 53.

The 5GC 30 includes an Access and Mobility Management Function (AMF) 31, a Session Management Function (SMF) 32, a User Plane Function (UPF) 33, a Policy Control Function (PCF) 34, and a Network Exposure Function (NEF) 35.

The base stations 21 and 52 belong to a Radio Access Network (RAN). Each of the base stations 21 and 52 may be a gNB or an ng-eNB. As already explained, the operator (e.g., MNO) of the base station 21 may be different from the operator (e.g., railway operator) of the base station 52. The operator (e.g., railway operator) of the base station 52 may build a system similar to that of the operator (e.g., MNO) of the base stations 21 .

The base station 21 terminates a Control Plane (CP) interface (i.e., N2 interface) with the 5GC 30 and interworks with the AMF 31 in the 5GS 30 over that CP interface. In some implementations, the base station 52 may also terminate a CP interface (i.e., N2 interface) with the 5GC 30 and interwork with the AMF 31 on that CP interface. In other implementations, the base station 52 may not have a CP interface with any AMF. For example, if the base station 52 is responsible for only a secondary node (SN) in Dual Connectivity (DC) in non-standalone deployment, then the base station 52 need not have a CP interface with 5GC 30.

The base station 21 provides one or more cells, including the cell 25, while the base station 52 provides one or more cells, including the cell 54. The cell 25 may operate in a different frequency band than the cell 54. For example, the cell 25 may operate in one of the sub-6 GHz frequency bands in FR1, while the cell 54 may operate in one of the millimeter wave frequency bands in FR2. As shown in Figure 2, the cell 54 in the higher frequency band may be a local cell (small cell) located within the cell 25 in the lower frequency band. The cell 25 may completely cover the cell 54 or may partially overlap with the cell 54.

The AMF 31 is one of the network functions in the 5GC control plane. The AMF 31 provides the termination of a RAN CP interface (i.e., N2 interface). The AMF 31 terminates a single signalling connection (i.e., N1 Non-Access Stratum (NAS) signalling connection) with the UE 1 and provides registration management, connection management and mobility management. In addition, the AMF 31 provides NF services over a service based interface (i.e., Namf interface) to NF consumers (e.g., other AMFs, SMF 32 and Authentication Server Function (AUSF)). Furthermore, the AMF 31 uses NF services provided by other NFs (e.g., Unified Data Management (UDM), Network Slice Selection Function (NSSF), and PCF 34).

The SMF 32 is one of the network functions in the 5GC control plane. The SMF 32 manages protocol data unit (PDU) sessions. The SMF 32 sends and receives SM signalling messages (NAS-SM messages) to and from the Non-Access-Stratum (NAS) Session Management (SM) layer of the UE 1 via communication services provided by the AMF 31. The SMF 32 provides NF services on a service-based interface (i.e., Nsmf interface) to NF consumers (e.g., AMF 31, other SMFs). The NF services provided by the SMF 32 include a PDU Session management service (Nsmf_PDUSession), which allows the NF consumer (e.g., AMF 31) to handle PDU Sessions. The SMF 32 may be an Intermediate SMF (I-SMF). The I-SMF is inserted between the AMF 31 and an original SMF as needed when the UPF 33 belongs to a different SMF service area and cannot be controlled by the original SMF.

The UPF 33 is one of the network functions in the 5GC user plane. The UPF 33 processes and forwards user data. The functionality of the UPF 33 is controlled by the SMF 32. The UPF 33 is interconnected with a data network (DN) 70 and acts as an anchor point towards the DN 70 for one or more PDU Sessions of the UE 1. The UPF 33 may include a plurality of UPFs interconnected via N9 interfaces. More specifically, a user plane (UP) path for a PDU Session of the UE 1 may include one or more PDU Session Anchor (PSA) UPFs, may include one or more Intermediate UPFs (I-UPFs), and may include one or more Uplink Classifier (UL CL) UPFs (or Branching Point (BP) UPFs).

In the example in Figure 2, the UPF 33 includes a central UPF 33A and a local UPF 33B, and the DN 70 includes DNs 70A and 70B. The central UPF 33A provides a UP path between the DN 70A and the UE 1 so that the UE 1 and the center server 4 can communicate with each other. On the other hand, the local UPF 33B provides a UP path between the DN 70B and UE 1 to allow the UE 1 and the entrance gate 53 to communicate with each other. The local UPF 33B provides steering of user plane traffic for local access to the DN 70B. The local UPF 33B may be located at the boarding station 5, together with the base station 52, the entrance gate 53, and the station server 51.

The PCF 34 provides a variety of policy controls, including policy controls for session management-related functions and access and mobility-related functions. For example, the PCF 34 interacts with the SMF32 (via an N7 interface) for session management-related policy control. In addition, the PCF 34 may interact with the center server 4 directly (via an N5 interface) or via the NEF 35.

The NEF 35 has a role similar to Service Capability Exposure Function (SCEF) of the Evolved Packet System (EPS). Specifically, the NEF 35 supports the exposure of services and capabilities from the 5G system to applications and network functions inside and outside the operator network.

The UE 1 uses 5G connectivity services to communicate with data networks (DNs) 70A and 70B. More specifically, the UE 1 is connected to the base station 21 and communicates with the DN 70A via the central UPF 33A in the application layer. Similarly, the UE 1 is connected to the base station 52 and communicates with the DN 70B via the local UPF 33B in the application layer.

The term "application layer" in this specification refers to all protocol layers above the PDU Session (PDU Session layer) provided by the 5GS between the UE 1 and the DNs 70A and 70B. For example, if the PDUs are IP packets, the application layer includes not only application protocols such as Hypertext Transfer Protocol (HTTP) and File Transfer Protocol (FTP), but also transport layer protocols (e.g., User Datagram Protocol (UDP) and Transmission Control Protocol (TCP)) between the IP and the application protocols.

The center server 4 is able to communicate with an application running on a processor of the UE 1 (UE application) via the DN 70A (e.g., the internet, or any other IP network) and a PDU Session between the DN 70A and the UE 1. In addition, the center server 4 may interact with the PCF 34 to request policy control from the 5GC 30 regarding the PDU Session of the UE 1. As described above, the center server 4 may interact with the PCF 34 either directly or through the NEF 35. In this case, the center server 4 acts as an Application Function (AF) as defined by 3GPP. The center server 4 may include one or more computers. For example, the center server 4 may include one or more servers communicating with the UE 1 in the application layer, and a controller (i.e., an AF in the 3GPP definition) that works with these one or more servers and interacts with the 5GC 30 (e.g., PCF 34).

The entrance gate 53 is able to communicate with a UE application running on a processor of the UE 1 via the DN 70B and a PDU Session between the DN 70B and the UE 1. The entrance gate 53 may include one or more computers. For example, the entrance gate 53 may include one or more servers communicating with the UE 1 in the application layer, and a controller that cooperates with these one or more servers and controls the physical gate.

The configuration example in Figure 2 shows only typical NFs for convenience of explanation. The cellular communication network of this embodiment may include other NFs not shown in Figure 2.

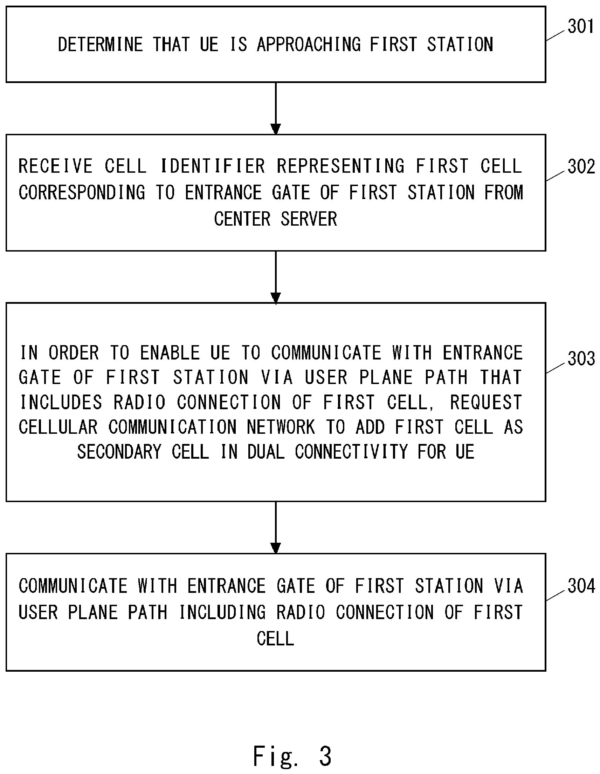

Figure 3 shows an example of the behavior of the UE 1 to get on a train. In step 301, the UE 1 determines that it is approaching a first station (in this case, boarding station 5). The UE 1 may, for example, periodically acquire Global Positioning System (GPS) location information to track the current position of the UE 1.

In step 302, the UE 1 communicates with the center server 4 in the application layer via the cellular communication network. Specifically, a UE application running on the UE 1 communicates with the center server 4 via a UP path through the cell 25, the base station 21, and the central UPF 33A. The UE 1 (UE application) then receives a cell identifier representing a first cell (cell 54) corresponding to the entrance gate 53 of the first station (boarding station 5) from the center server 4 via application layer communication. The cell identifier may be a Physical Cell ID (PCI). Additionally or alternatively, the cell identifier may contain an identifier of the base station 21. The UE 1 (UE application) may receive a frequency band identifier (e.g., NR Absolute Radio Frequency Channel Numbers (NR-ARFCN)) in addition to the cell identifier from the center server 4. The frequency band identifier indicates the frequency band in which the first cell (cell 54) operates.

In step 303, in order to enable the UE 1 to communicate with the entrance gate 53 of the first station (boarding station 5) via a UP path that includes a radio connection (i.e., Data Radio Bearer (DRB)) of the first cell (cell 54), the UE 1 requests the cellular communication network to add the first cell (cell 54) as a secondary cell (Secondary Cell Group (SCG) cell) in dual connectivity for the UE 1.
Specifically, the UE 1 generates a NAS message requesting establishment or modification of a PDU Session and sends it to the SMF 32 through the AMF 31. The NAS message may be a PDU Session Establishment Request message or a PDU Session Modification Request message. At this time, the UE 1 may include in that NAS message the cell identifier (and frequency band identifier) of the candidate SCG cell (i.e., cell 54) for dual connectivity.

The NAS message causes the 5GC 30 to set up or modify a UP path so that user data belonging to the PDU Session of the UE 1 is transferred via the UP path including a radio connection (i.e., DRB) of the candidate SCG cell (i.e., cell 54) specified by the UE 1. In other words, in response to the NAS message from the UE 1, the 5GC 30 sets up or modifies a UP path so that the user data belonging to a PDU Session of the UE 1 is transferred over the UP path including a radio connection (i.e., DRB) of the specific SCG cell of dual connectivity. The user data belonging to the PDU Session of the UE 1 may be one or more Quality of Service (QoS) flows.

If the request from the UE 1 is to establish a new PDU Session, a UP path for one or more QoS flows belonging to the newly established PDU Session is set up as described above. On the other hand, if the request from the UE 1 is to modify a PDU Session, a UP path for one or more QoS flows belonging to the established PDU Session is set up or modified as described above.

The UP path includes an N3 tunnel between the UPF 33 (specifically PSA UPF) in the 5GC 30 and the RAN (specifically the base station 21 or 52), and a radio connection (DRB) between the RAN (specifically the base station 21 or 52) and the UE 1. If multiple UPFs are used for the PDU Session, the UP path may also include one or more N9 tunnels between the UPFs. The N3 and N9 tunnels may be General Packet Radio Service (GPRS) Tunnelling Protocol for User Plane (GTP-U) tunnels.

Dual connectivity allows a UE to simultaneously use the Master Cell Group (MCG) provided by the Master Node (MN) (e.g., base station 21) and a Secondary Cell Group (SCG) provided by a Secondary Node (SN) (e.g., base station 52). The MCG is a group of serving cells associated with (or provided by) a RAN node (e.g., base station 21) acting as the MN of DC, and includes SpCell (i.e., Primary Cell (PCell)) and optionally one or more Secondary Cells (SCells). Meanwhile, the SCG is a group of serving cells associated with (or provided by) a RAN node (e.g., base station 52) acting as an SN of DC, and includes the primary cell of the SCG and optionally one or more Secondary Cells (SCells). The primary cell of the SCG is referred to as Primary SCG cell (PSCell) or Primary Secondary Cell (PSCell). The PSCell is the Special Cell (SpCell) of the SCG.

In step 304, the UE 1 communicates in the application layer with the entrance gate 53 via the UP path including the radio connection of the first cell (cell 54) to pass through the entrance gate 53 of the first station (boarding station 5). As already described, a computer system providing part or all of the functions of the entrance gate 53 may be physically integrated with a computer system providing part or all of the functions of the station server 51. Accordingly, in some implementations, in step 304, the UE 1 may communicate with the entrance gate function of the first station (boarding station 5) in the application layer. The entrance gate function may be provided by the same computer system as the station server 51. In other words, in step 304, the UE 1 may communicate in the application layer with the station server functionality associated with the first station (boarding station 5) via the UP path including the radio connection in the first cell (cell 54).

Following the procedure shown in Figure 3, the UE 1 determines its proximity to the boarding station 5 and, in response to that determination, requests the 5GC 30 to provide the cell 54 associated with the entrance gate 53 of the boarding station 5 as an SCG cell for dual connectivity. This allows the UE 1 to request the 5GC 30 to prepare for dual connectivity using the candidate SCG cell (cell 54) before the UE 1 actually receives radio signals from the candidate SCG cell (cell 54). Such an operation can reduce the latency required to transmit or receive user data in the cell 54 with narrow coverage when the UE 1 is able to receive signals of the cell 54.

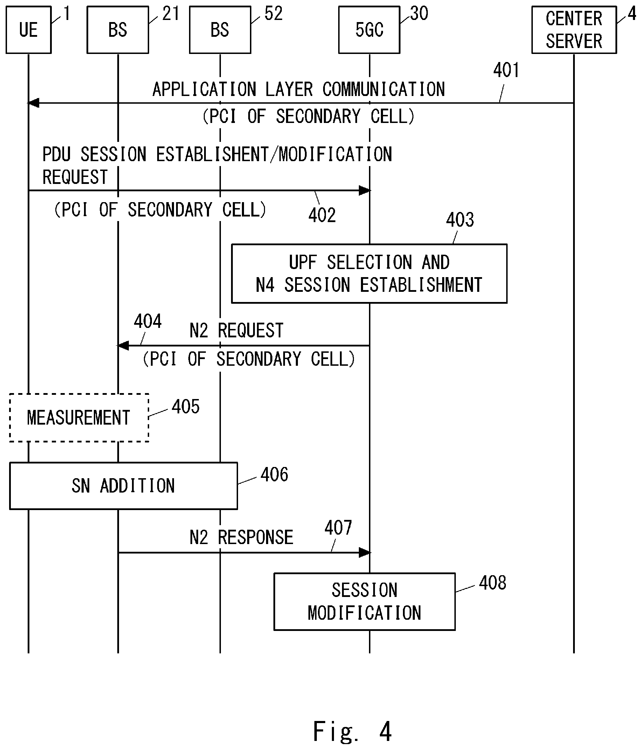

Figure 4 shows an example of signaling in this embodiment. According to the procedure in Figure 4, in response to a NAS message from the UE 1 requesting establishment or modification of a PDU Session, the 5GC 30 sets up or modify a UP path in such a way that the user data belonging to a PDU Session of the UE 1 is transferred via that UP path including a radio connection of a specific SCG cell of dual connectivity.

The procedure shown in Figure 4 is initiated (or triggered) by the UE 1 when the UE 1 camps on the cell 25 (e.g., FR1 macrocell) provided by the base station 21. The UE 1 requests the 5GC 30 to set up or modify a UP path to ensure that the traffic (i.e., one or more QoS flows) belonging to the PDU Session of the UE 1 passes through the specific SCG cell 54 (e.g., FR2 local cell) provided by the base station 52.

In step 401, the UE 1 communicates with the center server 4 in the application layer. The UE 1 receives a cell identifier (e.g., PCI) of the candidate SCG cell (i.e., cell 54) from the center server 4.

In step 402, the UE 1 sends a PDU Session Establishment Request message to the 5GC 30 to request establishment of a new PDU Session. Alternatively, the UE 1 may send a PDU Session Modification Request message to the 5GC 30 to request modification of an established PDU Session. The NAS-SM message sent in step 402 contains the cell identifier of the candidate SCG cell (i.e., cell 54). The UE 1 may perform an inter-frequency measurement in advance on the cell identifier (e.g., PCI) of the candidate SCG cell (i.e., cell 54) received in step 401. In this case, the UE 1 may include the result of the inter-frequency measurement for the candidate SCG cell (i.e., cell 54) in the NAS-SM message sent in step 402.

The NAS-SM message sent in step 402 may include other information elements needed for the establishment or modification of the PDU Session. More specifically, if the NAS-SM message is a PDU Session Establishment Request message, it may contain the PDU Session ID, Requested PDU Session Type, Requested Session and Service Continuity (SSC) mode, and other information elements. On the other hand, if the NAS-SM message is a PDU Session Modification Request message, it may contain the PDU Session ID, Packet Filters, Requested QoS, and other information elements.

The AMF 31 receives the NAS-SM message of step 402 and forwards it to the SMF 32. In step 403, the SMF 32 interacts with NFs, including the PCF 34 and the UPF 33, to establish the new PDU Session for the UE 1 or to modify the established PDU Session of the UE 1.

More specifically, when the SMF 32 establishes the new PDU Session for the UE 1, the SMF 32 may select a PSA UPF (i.e., local UPF 33B) for that PDU Session and request the local UPF 33B to set up an N3 tunnel to route one or more QoS flows of that PDU Session to the base station 52.

On the other hand, in the case of modifying an established PDU Session, the SMF 32 may decide to insert the Local UPF 33B, which acts as both a UL CL UPF and an additional PSA UPF, into the UP path of the established PDU Session of the UE 1. In this case, the SMF 32 may provide both the central UPF 33A and the local UPF 33B with an N9 tunnel configuration for the insertion of the local UPF 33B, and may provide packet detection and forwarding rules to the local UPF 33B.

In step 404, the 5GC 30 sends an N2 request to the base station 21. This N2 request may be a PDU SESSION RESOURCE SETUP REQUEST message or a PDU SESSION RESOURCE MODIFY REQUEST message. The N2 request includes the cell identifier of the candidate SCG cell 54. The N2 request thereby requests the base station 21 to add the candidate SCG cell specified by the UE 1 (in this case, the cell 54) as an SCG cell in DC for the UE 1. The N2 request further requests the base station 21 to set up or modify a UP path so that the user data belonging to the PDU Session of the UE 1 is forwarded via that UP path including a radio connection of the SCG cell 54. In step 404, the 5GC 30 may include in the N2 request the inter-frequency measurement results for the candidate SCG cell (i.e., cell 54) contained in the NAS-SM message received in step 402.

More specifically, the SMF 32 sends N2 SM information and an N1 SM container to the AMF 31. The SMF 32 performs (or invokes) Namf_Communication_N1N2MessageTransfer. The N1 SM container contains a NAS-SM message to be sent to the UE 1. This NAS-SM message is a PDU Session Establishment Accept message in the case of PDU Session establishment, or a PDU Session Modification Command message in the case of PDU Session modification. Meanwhile, the N2 SM information contains information needed for the routing of the QoS flows to be added or updated (e.g., PDU Session ID, QoS Flow Identifier(s) (QFI(s)), and QoS Profile(s), CN Tunnel Info). The CN Tunnel Info indicates an N3 (GTP-U) tunnel endpoint of the local UPF 33B. The N2 SM information may further include the PCI of the candidate SCG cell (cell 54) specified by the UE 1. The N2 SM information may explicitly indicate that dual connectivity is required. Alternatively, the SMF 32 may include, in Nsmf_PDUSession_UpdateSMContext Response or Namf_Communication_N1N2MessageTransfer, a cause indicating that dual connectivity or handover is required.

The base station 21 receives the N2 request from the AMF 31 and decides to add the cell 54 as an SCG cell in DC for the UE 1. In step 405, the base station 21 may make the UE 1, which is in Radio Resource Control (RRC)_CONNETED, perform an inter-frequency measurement. The base station 21 may create an inter-frequency measurement configuration to allow the UE 1 to measure the frequency band in which the cell 54 is operating. More specifically, the base station 21 may create a configuration (e.g., measurement gap) needed to measure the frequency band in which the cell 54 operates (e.g., FR2 band), taking into account the radio capabilities of the UE 1 (e.g., the number of Radio Frequency (RF) chains in the UE 1). The base station 21 may send to the UE 1 an RRC message containing the created configuration for inter-frequency measurement. The RRC message may be an RRC Reconfiguration message. If the base station 21 has already received measurement results from the UE 1, the measurement in step 405 may be skipped. The measurement results by the UE 1 may be delivered to the base station 21 via the NAS-SM message in step 402 and the N2 request message in step 404.

In step 406, the base station 21 performs a Secondary Node (SN) addition procedure to add the cell 54 as an SCG cell. More specifically, the base station 21 sends a SN Addition Request message to the base station 52. The base station 52 sends a SN Addition Request Acknowledge message to the base station 21. The SN Addition Request Acknowledge message contains an SN RRC message. The base station 21 then sends a Master Node (MN) RRC Reconfiguration message to the UE 1. This MN RRC Reconfiguration message contains the SN RRC message received from the base station 52 and contains the N1 SM container (PDU Session Establishment Accept or PDU Session Modification Command) received from the AMF 31.

Subsequently, with respect to the radio bearer in the SCG cell 54, the base station 21 (or the base station 52) updates the UP path to the 5GC (local UPF 33B) through a PDU Session path update procedure. Specifically, in step 407, the base station 21 sends an N2 response to the AMF 31. This N2 response may be a PDU SESSION RESOURCE SETUP RESPONSE message or a PDU SESSION RESOURCE MODIFY RESPONSE message. The N2 response contains N2 SM information. This N2 SM information includes AN Tunnel Info that indicates an N3 (GTP-U) tunnel endpoint of the base station 52, which is the SN of the DC. In step 408, the AMF 31 forwards the N2 SM information received from the base station 21 to the SMF 32, and the SMF 32 updates the local UPF 33B based on that N2 SM information. This allows the UE 1 to perform DC using the cell 25 as the Master Cell Group (MCG) cell and the cell 54 as the SCG cell.

The UE 1 may notify the application program for rail use running on the UE 1 that it is ready to perform DC using the cell 54 as a SCG cell. In this case, the application program for rail use may notify the user that it is ready to pass through an automatic ticket gate using cellular communication technology. For example, the application program may notify this to the user via outputting sound from a speaker of the UE 1, vibration of a vibration motor of the UE 1, or an indication on a display of the UE 1.

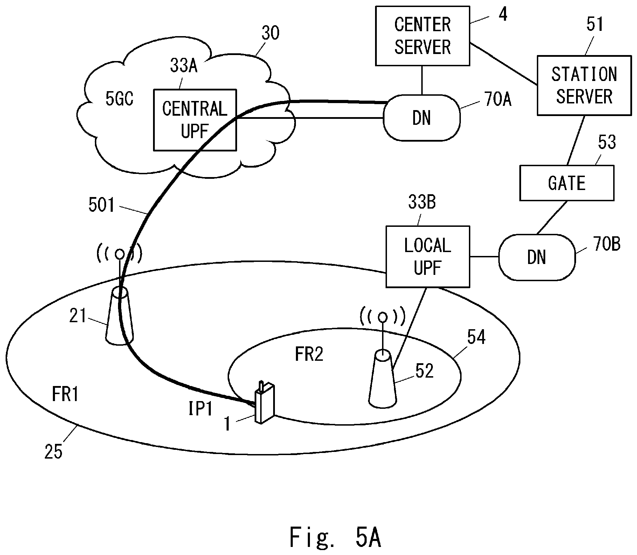

The following paragraphs describe specific examples of the change in the UP path with reference to Figures 5A to 5C. In the example shown in Figures 5A to 5C, the cell 25 may operate in an FR1 band (sub-6 GHz) and the cell 54 may operate in an FR2 band (e.g., 28 GHz). Alternatively, the cell 54 may operate in an unlicensed frequency band. Figure 5A shows the UP path before the UP path change involving dual connectivity is performed. The UP path 501 shown in Figure 5A is used for the transfer of all the QoS flows belonging to the PDU Session between the DN 70A and the UE 1. The UP path 501 includes a radio connection (DRB) in the cell 25 and an N3 tunnel between the base station 21 and the central UPF 33A. The IP address assigned to the UE 1 in this PDU Session is "IP1".

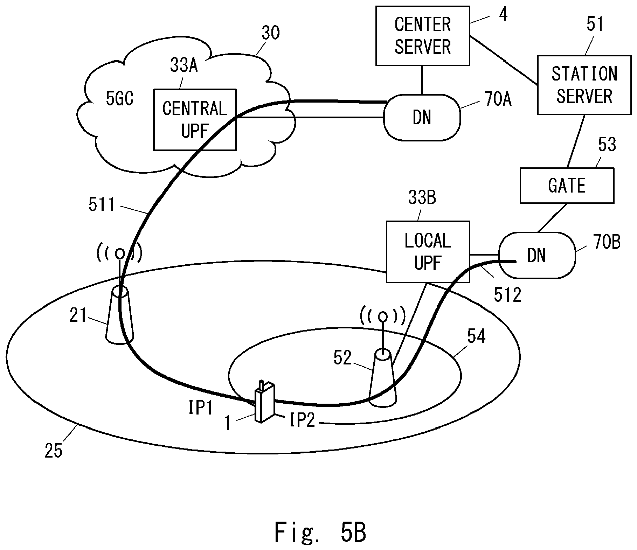

Figure 5B shows the UP path after a new PDU Session has been established for the UE 1 and dual connectivity has been initiated using the cell 25 as an MCG cell and the cell 54 as an SCG cell. The UP path 511 shown in Figure 5B is identical to the UP path 501 in Figure 5A and is used to forward all the QoS flows belonging to the PDU Session already established before the DC. On the other hand, the UP path 512 is used to forward all the QoS flows belonging to the newly established PDU Session between the DN 70B and the UE 1. The IP address assigned to the UE 1 in the new PDU Session using UP path 512 is "IP2". The local UPF 33B in Figure 5B may forward the uplink traffic of the QoS flow(s) of the newly established PDU Session (IP2) to the DN 70B for local access via the UP path 512.

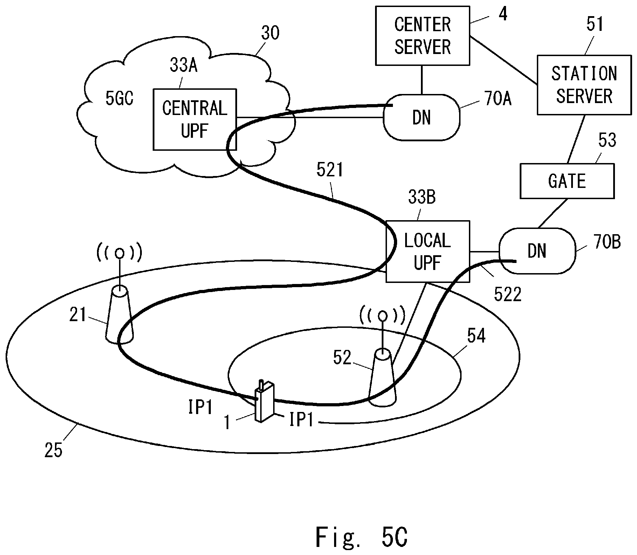

Figure 5C also shows the UP path after dual connectivity is initiated, but in Figure 5C the UP path of the PDU Session established before dual connectivity has been modified. The local UPF 33B in Figure 5C acts as UL CL and additional PSA. This allows the local UPF 33B to forward the uplink traffic of one or more newly added QoS flows to the DN 70B for local access via the UP path 522. In addition, the local UPF 33B can forward the uplink traffic of one or more QoS flows already configured before the DC to the DN 70A through the central UPF 33A via the UP path 521. In the Example of Figure 5C, the DN 70A and the DN 70B are the same DN. Besides, the PDU Session is split at the local UPF 33B. The local UPF 33B forwards the downlink traffic of one or more QoS flows already configured before the DC to the base station 21 (MN) and forwards the downlink traffic of one or more newly added QoS flows to the base station 52 (SN).

### Second Embodiment

A configuration example of a radio communication network pertaining to this embodiment is similar to that described with reference to Figures 1 and 2. This embodiment provides a specific example of boarding confirmation process performed by the UE 1.

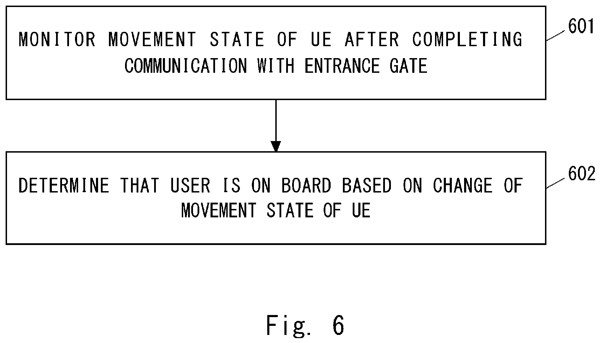

Figure 6 shows an example of operation of the UE 1. In step 601, the UE 1 monitors a movement state of the UE 1 after completing communication with the entrance gate 53 (or station server 51) of the boarding station 5. For example, the UE 1 may monitor the current position, movement speed, or acceleration of the UE 1, or any combination of these. For this purpose, the UE 1 may utilize a GPS receiver or an accelerometer or both implemented in the UE 1.

In step 602, the UE 1 determines (or confirms) that the user is on board based on the change of the movement state of the UE 1. Specifically, the UE 1 may determine that the user is boarding a train in response to detecting that the movement state of the UE 1 (current position, movement speed, and acceleration) has changed from the supposed level when walking to that when moving by train.

The UE 1 may notify the center server 4 via the cellular communication network (e.g., cell 25 and base station 21) that it has confirmed the user's boarding.

According to the operation shown in Figure 6, the UE 1 can confirm that the user is on board. This can, for example, be used by the UE 1 as a trigger to start the determination process of the alighting station, which is described later. In addition, or alternatively, it can be used, for example, to correct errors in judging the passage of the entrance gate 53. If the center server 4 does not receive a notification of boarding confirmation from the UE 1 after receiving a notification indicating the passage through the entrance gate of the UE 1 from the station server 51, it may cancel the entrance gate passage of the UE 1. Alternatively, the center server 4 may record the entrance gate passage of the UE 1 if it receives a notification of the boarding confirmation at the station 5 from the UE 1 even though it has not received a notification indicating the entrance gate passage of the UE 1 from the station server 51.

### Third Embodiment

A configuration example of a radio communication network pertaining to this embodiment is similar to that described with reference to Figures 1 and 2. This embodiment provides a specific example of an alighting process performed by the UE 1.

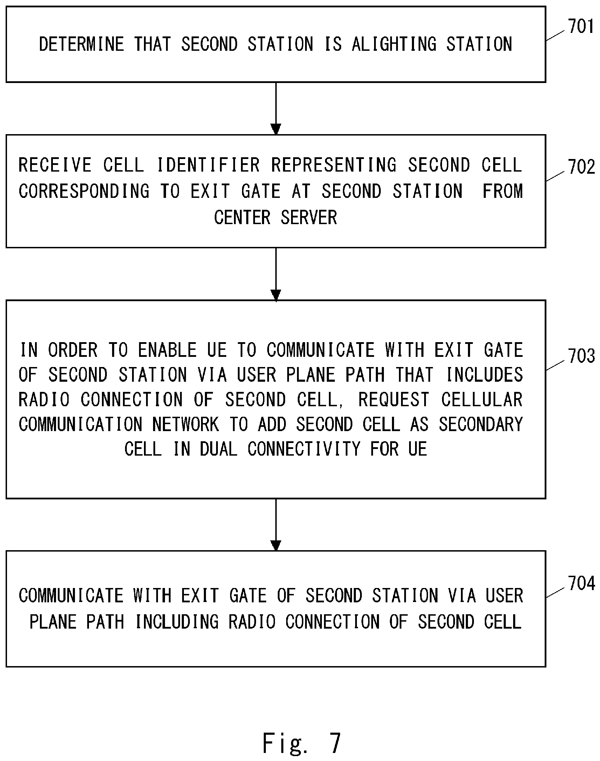

Figure 7 shows an example of operation performed by the UE 1 at the time of alighting. In step 701, the UE 1 determines that a second station (in this case, the station 6) is the alighting station. For example, the UE 1 may detect the user's alighting based on a change in the movement state of the UE 1. Specifically, the UE 1 may determine that the user has alighted in response to detecting that the movement state of the UE 1 (current position, movement speed, acceleration) has changed from the supposed level of train movement to that of walking movement. In addition, the UE 1 may identify the alighting station based on the current position of the UE 1 at the time of alighting. For this purpose, the UE 1 may utilize a GPS receiver or accelerometer or both implemented in the UE 1.

In step 702, the UE 1 communicates with the center server 4 in the application layer via the cellular communication network. Specifically, the UE application running on the UE 1 communicates with the center server 4 via a UP path through the cell 26, the base station 22, and the central UPF 33A. The UE 1 (UE application) then receives a cell identifier representing a second cell (cell 64) corresponding to the exit gate 63 at the second station (alighting station 6) from the center server 4 via application layer communication. The cell identifier may be a PCI. Additionally or alternatively, the cell identifier may contain an identifier of the base station 22. The UE 1 (UE application) may receive a frequency band identifier (e.g., NR-ARFCN) from the center server 4 in addition to the cell identifier. The frequency band identifier indicates the frequency band in which the second cell (cell 64) operates.

In step 703, in order to enable the UE 1 to communicate with the exit gate 63 of the third station (alighting station 6) via a UP path that includes a radio connection (i.e., DRB) of the second cell (cell 64), the UE 1 requests the cellular communication network to add the second cell (cell 64) as an SCG cell in dual connectivity for the UE 1. Specifically, the UE 1 generates a NAS message requesting establishment or modification of a PDU Session and sends it to the SMF 32 through the AMF 31. The NAS message may be a PDU Session Establishment Request message or a PDU Session Modification Request message. At this time, the UE 1 may include in that NAS message the cell identifier (and frequency band identifier) of the candidate SCG cell (i.e., cell 64) for dual connectivity.

The NAS message causes the 5GC 30 to set up or modify a UP path so that user data belonging to the PDU Session of the UE 1 is transferred via the UP path including a radio connection (i.e., DRB) of the candidate SCG cell (i.e., cell 64) specified by the UE 1.

In step 704, the UE 1 communicates with the exit gate 63 in the application layer via the UP path including the radio connection of the second cell (cell 64) to pass through the exit gate 63 at the second station (alighting station 6). As already described, a computer system providing part or all of the functions of the exit gate 63 may be physically integrated with a computer system providing part or all of the functions of the station server 61. Accordingly, in some implementations, in step 704, the UE 1 may communicate with the exit gate function of the second station (alighting station 6) in the application layer. The exit gate function may be provided by the same computer system as the station server 61. In other words, in step 704, the UE 1 may communicate in the application layer with the station server functionality associated with the second station (alighting station 6) via the UP path including the radio connection in the second cell (cell 64).

Following the procedure shown in Figure 7, the UE 1 determines that the user has alighted and, in response to that determination, requests the 5GC 30 to provide the cell 64 associated with exit gate 63 at the alighting station 6 as an SCG cell for dual connectivity. This allows the UE 1 to request the 5GC 30 to prepare for dual connectivity using the candidate SCG cell (cell 64) before the UE 1 actually receives radio signals of the candidate SCG cell (cell 64). Such an operation can reduce the latency required to transmit or receive user data in the cell 64 with narrow coverage when the UE 1 is able to receive signals in the cell 64.

The procedure for establishing or modifying a PDU Session in this embodiment may be similar to the procedure described with reference to Figure 4 in the first embodiment.

### Fourth Embodiment

A configuration example of a radio communication network pertaining to this embodiment is similar to that described with reference to Figures 1 and 2. This embodiment provides a specific example of a boarding process performed by the center server 4.

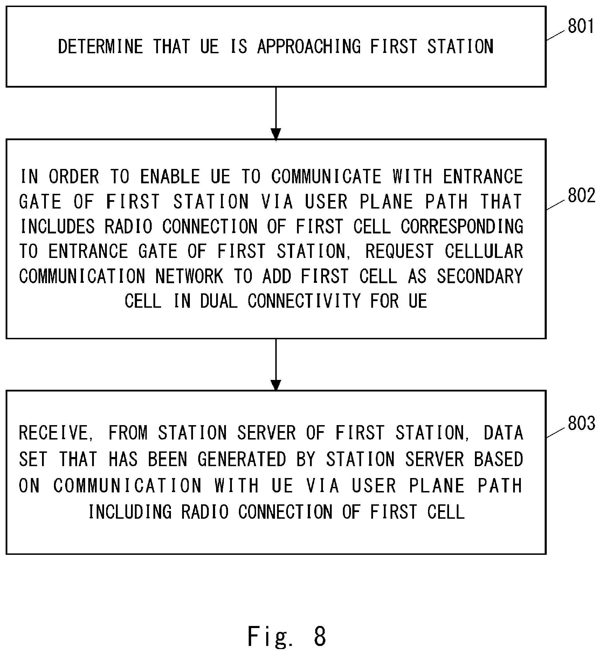

Figure 8 shows an example of operation of the center server 4 when a user of the UE 1 takes a train. In step 801, the center server 4 communicates with the UE 1 in the application layer via the cellular communication network and determines that the UE 1 is approaching a first station (in this case, the boarding station 5). The center server 4, for example, receives a current position report from the UE 1 and detect the approach of the UE 1 to the first station based on the current position of the UE 1. Alternatively, the center server 4 may receive a notification from the UE 1 indicating its approach to the first station.

In step 802, in order to enable the UE 1 to communicate with the entrance gate 53 (or station server 51) of the first station (boarding station 5) via a UP path including a radio connection (i.e., DRB) of the first cell (cell 54) corresponding to the entrance gate 53 of the first station (boarding station 5), the center server 4 requests the cellular communication network to add the first cell (cell 54) as a secondary cell (Secondary Cell Group (SCG) cell) in dual connectivity for the UE 1. Specifically, the center server 4 generates an AF request and sends it to the PCF 34 either directly or through the NEF 35. At this time, the center server 4 may include the cell identifier of the candidate SCG cell (i.e., cell 54) for dual connectivity in the AF request.

The AF request may include other information elements. More specifically, the AF request may include an identifier of the UE 1. The identifier of the UE 1 may be a Generic Public Subscription Identifier (GPSI), such as a Mobile Subscriber Integrated Services Digital Network Number (MSISDN) or an external identifier. The AF request may include an identifier of a PDU Session (e.g., PDU Session ID). The AF request may include information (e.g., 5-tuple) to identify one or more QoS flows contained in the PDU Session. The AF request may include a combination of Data Network Name (DNN) and Single Network Slice Selection Assistance Information (S-NSSAI). The DNN is an identifier indicating the DN (i.e., DN 70B) to which the traffic of the UE 1 is to be routed. The S-NSSAI is an identifier of a network slice. The AF request may include a list of one or more DN Access Identifiers (DNAIs). The DNAI(s) represent access location(s) to the DN 70B.

In step 803, the center server 4 receives from the station server 51 of the first station (boarding station 5) a data set that has been generated by the station server 51 based on communication with the UE 1 (i.e., communication between the UE 1 and the entrance gate 53) via the UP path including the radio connection of the first cell (cell 54). The dataset indicates that the user of the UE 1 has passed through the entrance gate 53 of the boarding station 5. The center server 4 manages the entrance gate passage of the user of the UE 1 based on the dataset.

Following the procedure shown in Figure 8, the center server 4 determines the approach of the UE 1 to the boarding station 5 and, in response to this determination, requests the 5GC 30 to provide the cell 54 associated with the entrance gate 53 of the boarding station 5 as an SCG cell for dual connectivity for the UE 1. This allows the center server 4 to request the 5GC 30 to prepare for dual connectivity using the candidate SCG cell (cell 54) before the UE 1 actually receives radio signals from the candidate SCG cell (cell 54). Such an operation can reduce the latency required to transmit or receive user data in the cell 54 with narrow coverage when the UE 1 is able to receive signals of the cell 54.

After the procedure shown in Figure 8, the center server 4 may operate as follows. In some implementations, the center server 4 may receive a notification generated based on a change in the mobility state of the UE 1 from the UE 1 via application layer communication. The notification may be generated and sent by the UE 1 according to the procedure described in the second embodiment. The center server 4 may then determine (or confirm) that the user of UE1 is on board based on said notification. This allows the center server 4 to confirm that the user has boarded. This can be used, for example, to correct errors in judging the passage of the entrance gate 53. If the center server 4 does not receive a notification of boarding confirmation from the UE 1 after receiving a notification indicating the passage through the entrance gate of the UE 1 from the station server 51, it may cancel the entrance gate passage of the UE 1. Alternatively, the center server 4 may record the entrance gate passage of the UE 1 if it receives a notification of the boarding confirmation at the station 5 from the UE 1 even though it has not received a notification indicating the entrance gate passage of the UE 1 from the station server 51.

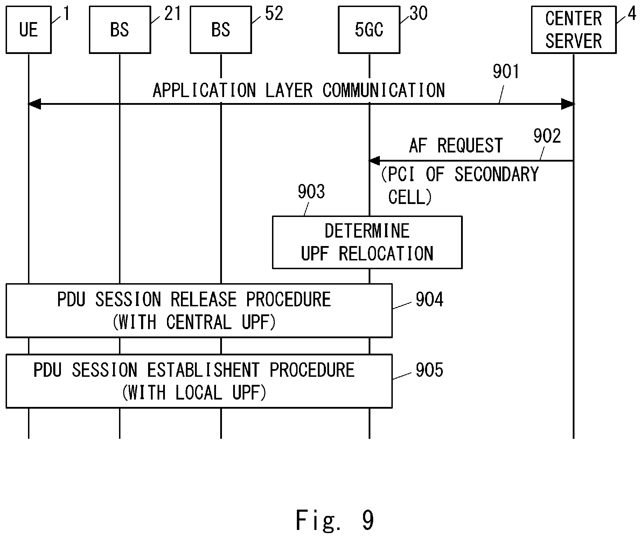

Figure 9 shows an example of signaling in the present embodiment. In the example of Figure 9, data mobility, known as SSC mode 2, is performed based on a request from the center server 4. In SSC mode 2, the SMF 32 performs the release of an existing PDU Session and the establishment of a new PDU Session to the same DN as the existing PDU Session. In the establishment of the new PDU Session, the SMF 32 may select a new PDU Session Anchor (PSA) UPF.

In step 901, the center server 4 communicates with the UE 1 in the application layer. The center server 4 may receive a report of the current position of the UE 1 from the UE 1.

In step 902, the center server 4 sends an AF request to the 5GC 30. Specifically, the center server 4 sends the AF request to the PCF 34 directly or via the NEF 35. The AF request requests the SMF 32 to relocate (or re-select) the PSA UPF according to SSC mode 2 in order to allow routing of user traffic to local access. The AF request includes a cell identifier (e.g., PCI) of a candidate SCG cell (i.e., cell 54) of DC for the UE 1. The AF request may also contain a DNAI or a Fully Qualified Domain Name (FQDN) to be used by the SMF 32 to select a local UPF. The AF request may include an identifier (e.g., GPSI) of the UE 1, PDU Session ID, information (e.g., 5-tuple) to identify a QoS flow, etc.

The PCF 34 receives the AF request directly or via the NEF 35, makes a policy decision based on the AF request, and determines that updated or new Session Management (SM) policy information needs to be sent to the SMF 32. The updated or new SM policy information may include the PCI sent from the center server 4. The PCF 34 then provides the updated or new SM policy information to the SMF 32. The PCF 34 may issue an Npcf_SMPolicyControl_UpdateNotify request with the updated or new SM policy information.

In step 903, the SMF 32 receives from the PCF 34 the SM policy information, which has been updated or generated based on the AF request. The SMF 32 determines that the PSA UPF for the established PDU Session of the UE 1 needs to be changed according to SSC mode 2.

In step 904, the SMF 32 initiates a PDU Session Release procedure to release the PDU Session associated with the current PSA UPF (e.g., central UPF 33A). The SMF 32 includes, in a PDU Session Release Command message to be sent to the UE 1, the PDU Session ID of the PDU Session to be released and a Cause indicating that a PDU Session re-establishment to the same DN is required.

In step 905, in response to the reception of the PDU Session Release Command message, the UE 1 generates a new PDU Session ID and initiates a PDU Session establishment procedure. The AMF 31 selects the SMF 32. The SMF 32 selects a new UPF (e.g., local UPF 33B) for the re-established PDU Session in SSC mode 2. The steps performed within step 905 after this are similar to steps 404 to 408 in Figure 4.

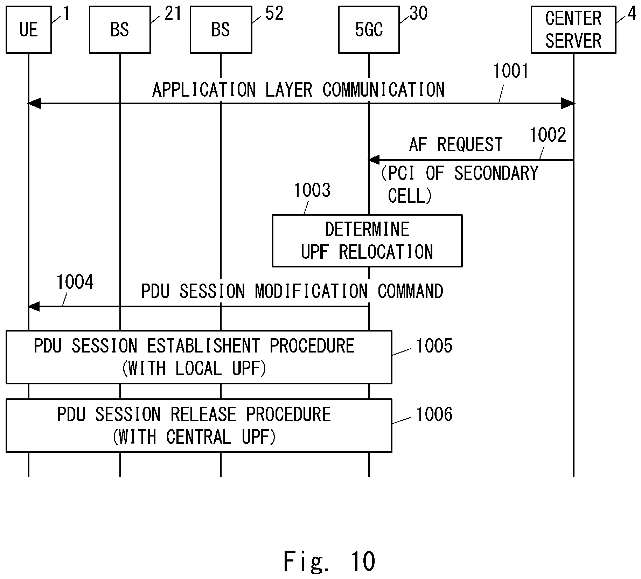

Figure 10 shows another example of signaling in the present embodiment. In the example of Figure 10, data mobility, known as SSC mode 3, is performed based on a request from the center server 4. In SSC mode 3, the SMF 32 establishes a new PDU Session to the same DN as an existing PDU Session before releasing the existing PDU Session, and then releases the existing PDU Session. Similar to SSC mode 2, in establishing the new PDU Session, the SMF 32 may select a new PDU Session Anchor (PSA) UPF.

Steps 1001 to 1003 are similar to steps 901 to 903 in Figure 9. However, in step 1003, the SMF 32 determines that the PSA UPF for the established PDU Session of the UE 1 needs to be changed according to SSC mode 3.

In step 1004, the SMF 32 sends a PDU Session Modification Command message to the UE 1. The PDU Session Modification Command message contains the PDU Session ID indicating the existing PDU Session to be relocated and a Cause indicating that a PDU Session re-establishment to the same DN is required.

In step 1005, the UE 1 initiates a PDU Session establishment procedure to the same DN in response to the PDU Session Modification Command of step 1004. Specifically, the UE 1 sends a PDU Session Establishment Request message. This PDU Session Establishment Request message contains a newly generated new PDU Session ID and the Old PDU Session ID indicating the existing PDU Session to be relocated. The AMF 31 selects the same SMF 32 that is serving the Old PDU Session ID and performs an Nsmf_PDUSession_CreateSMContext Request. The AMF 31 includes both the (new) PDU Session ID and the Old PDU Session ID in the Nsmf_PDUSession_CreateSMContext Request. The SMF 32 selects a new UPF (e.g., local UPF 33B) for the new PDU Session in SSC mode 3. The steps performed within step 1005 after this are the same as steps 404 to 408 in Figure 4.

In step 1006, the UE 1 or the SMF 32 initiates a release procedure for the old PDU Session.

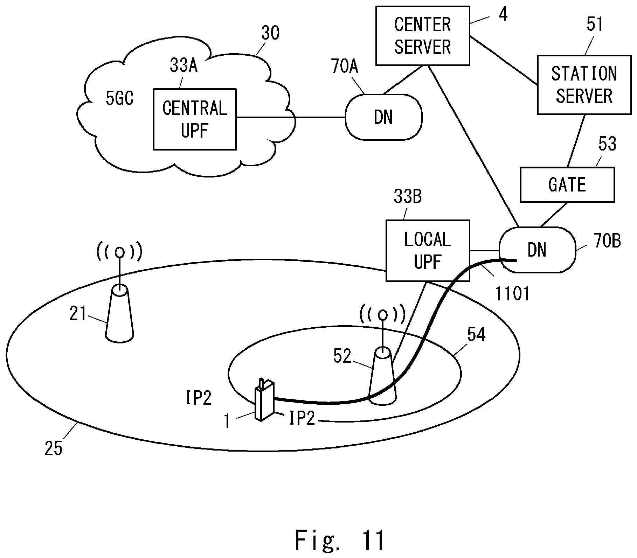

Figure 11 shows a UP path after the PDU Session Anchor is changed according to SSC mode 2 or SSC mode 3 and dual connectivity is initiated using the cell 25 as the MCG cell and the cell 54 as the SCG cell. The UP path 1101 shown in Figure 11 includes a radio connection (DRB) in the SCG cell 54, and an N3 tunnel between the base station 52 and the local UPF 33B.

### Fifth Embodiment

A configuration example of a radio communication network pertaining to this embodiment is similar to that described with reference to Figures 1 and 2. This embodiment provides a specific example of an alighting process performed by the center server 4.

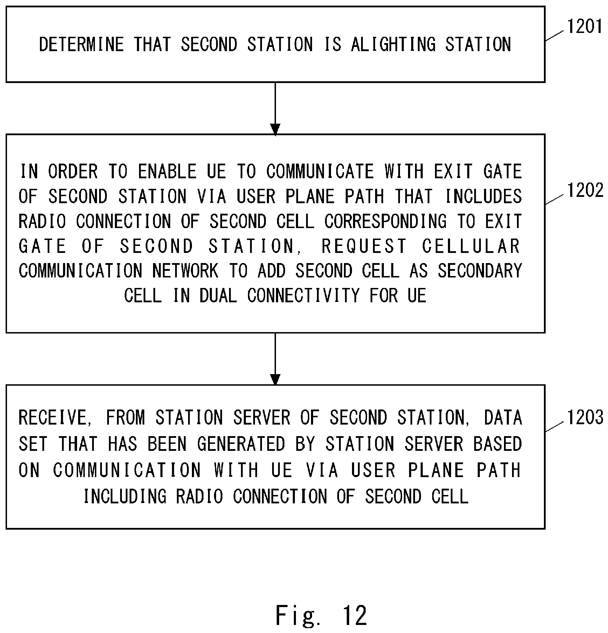

Figure 12 shows an example of operation performed by the center server 4 at the time of alighting. In step 1201, the center server 4 determines that a second station (in this case, the station 6) is the alighting station. The center server 4 may receive a notification indicating alighting at the second station (station 6) from the UE 1 via application layer communication and determine the alighting station based on the notification.

In step 1202, in order to enable the UE 1 to communicate with the exit gate 63 (or station server 61) of the second station (alighting station 6) via a UP path including a radio connection (i.e., DRB) of the second cell (cell 64) corresponding to the exit gate 63 of the second station (alighting station 6), the center server 4 requests the cellular communication network to add the second cell (cell 64) as a secondary cell (Secondary Cell Group (SCG) cell) in dual connectivity for the UE 1. Specifically, the center server 4 generates an AF request and sends it to the PCF 34 either directly or through the NEF 35. At this time, the center server 4 may include the cell identifier of the candidate SCG cell (i.e., cell 64) for dual connectivity in the AF request.

In step 1203, the center server 4 receives from the station server 61 of the second station (alighting station 6) a data set that has been generated by the station server 61 based on communication with the UE 1 (i.e., communication between the UE 1 and the exit gate 63) via the UP path including the radio connection of the second cell (cell 64). The dataset indicates that the user of the UE 1 has passed through the exit gate 63 of the alighting station 6. The center server 4 manages the exit gate passage of the user of the UE 1 based on the dataset.

Following the procedure shown in Figure 12, the center server 4 determines the approach of the UE 1 to the alighting station 6 and, in response to this determination, requests the 5GC 30 to provide the cell 64 associated with the exit gate 63 of the alighting station 6 as an SCG cell in dual connectivity for the UE 1. This allows the center server 4 to request the 5GC 30 to prepare for dual connectivity using the candidate SCG cell (cell 64) before the UE 1 actually receives radio signals from the candidate SCG cell (cell 64). Such an operation can reduce the latency required to transmit or receive user data in the cell 64 with narrow coverage when the UE 1 is able to receive signals of the cell 54.

### Sixth Embodiment

A configuration example of a radio communication network pertaining to this embodiment is similar to that described with reference to Figures 1 and 2. It is conceivable that an automatic ticket gate system using cellular communication technology may not be installed at either or both of the boarding and alighting stations. It is conceivable that an automatic ticket gate system using cellular communication technology may not be installed at either or both of the boarding and alighting stations. It is thus preferable that the user of the UE 1 be able to enter or exit stations via an existing RFID-based ticket gate system. This embodiment provides an improvement to make this possible.

In some implementations, the UE 1 is equipped with an RFID chip. As an application program for rail use is executed by a processor of the UE 1, it causes the processor to utilize both the existing RFID-based ticket gate system and the automatic ticket gate system using cellular communication technology described in any of the above described embodiments. Specifically, the application program running on the UE 1 manages the rail user's usage status, including entry into or exit from stations, and updates such usage status via communication with either the automatic ticket gate system using cellular communication technology or the RFID-based ticket gate system. In addition, the station server 51 can be connected to both the automatic ticket gate system using cellular communication technology and the RFID-based ticket gate system. The station server 51 receives a notification indicating the entrance or exit of the UE 1 from either the automatic ticket gate system using cellular communication technology or the RFID-based ticket gate system, and reports it to the center server 4. The center server 4 manages the usage status of the rail user of the UE 1, communicates with the station server 51, and updates the usage status of the UE 1. These allow the UE 1 to enter or leave the station through either the automatic ticket gate system using cellular communication technology or the RFID-based ticket gate system. In other words, in this embodiment, the automatic ticket checker system using cellular communication technology ensures backward compatibility with the RFID-based ticket checker system.

In other implementations, an RFID chip not implemented in the UE 1, such as an RFID chip mounted on a plastic card, may be used. In this case, the center server 4 may associate the user ID for using railway-related services via the application program running on the UE 1 with the ID number of the plastic card with the RFID-chip inside. Alternatively, the center server 4 may associate the user ID for using railway-related services via the application program running on the UE 1 with the second user ID for using railway-related services via the RFID chip installed in the plastic card. This allows the user to enter or leave the station either through the communication between the automatic ticket gate system and the UE 1 using cellular communication technology or through the communication between the automatic ticket gate system using existing RFID and the RFID chip not implemented in the UE 1.

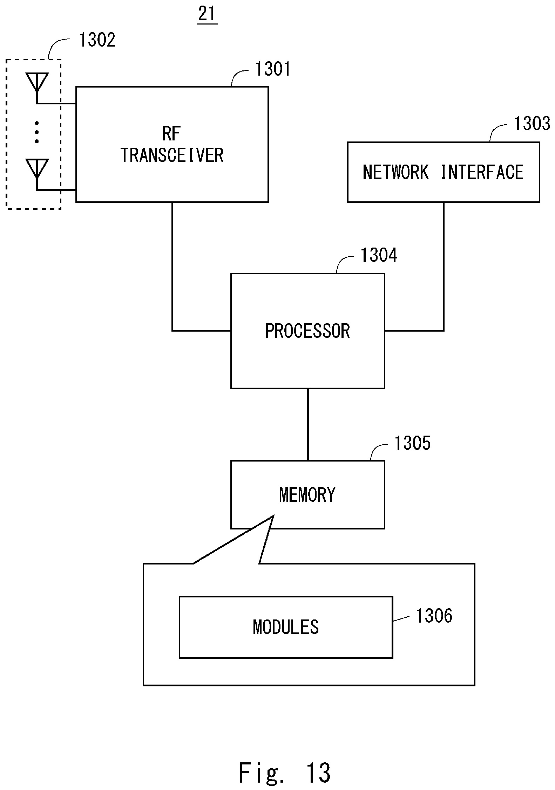

The following provides configuration examples of the UE 1, base stations 21, 22, 52, and 54, control plane nodes (e.g., SMF 32) in the 5GC 30, and center server 4 according to the above-described embodiments. Figure 13 is a block diagram showing a configuration example of the base station 21 according to the above-described embodiments. The base stations 22, 52 and 62 may have a configuration similar to that shown in Figure 13. Referring to Figure 13, the base station 21 includes a Radio Frequency (RF) transceiver 1301, a network interface 1303, a processor 1304, and a memory 1305. The RF transceiver 1301 performs analog RF signal processing to communicate with UEs. The RF transceiver 1301 may include a plurality of transceivers. The RF transceiver 1301 is coupled to an antenna array 1302 and the processor 1304. The RF transceiver 1301 receives modulated symbol data from the processor 1304, generates a transmission RF signal, and supplies the transmission RF signal to the antenna array 1302. Further, the RF transceiver 1301 generates a baseband reception signal based on a reception RF signal received by the antenna array 1302 and supplies the baseband reception signal to the processor 1304. The RF transceiver 1301 may include an analog beamformer circuit for beam forming. The analog beamformer circuit includes, for example, a plurality of phase shifters and a plurality of power amplifiers.

The network interface 1303 is used to communicate with network nodes (e.g., other RAN nodes, AMF 31, and UPF 33). The network interface 1303 may include, for example, a network interface card (NIC) conforming to the IEEE 802.3 series.

The processor 1304 performs digital baseband signal processing (i.e., data-plane processing) and control-plane processing for radio communication. The processor 1304 may include a plurality of processors. The processor 1304 may include, for example, a modem processor (e.g., a Digital Signal Processor (DSP)) that performs digital baseband signal processing and a protocol stack processor (e.g., a Central Processing Unit (CPU) or a Micro Processing Unit (MPU)) that performs the control-plane processing.

The digital baseband signal processing by the processor 1304 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. The control-plane processing performed by the processor 1304 may include processing of Non-Access Stratum (NAS) messages, RRC messages, MAC CEs, and DCIs.

The processor 1304 may include a digital beamformer module for beam forming. The digital beamformer module may include a Multiple Input Multiple Output (MIMO) encoder and pre-coder.

The memory 1305 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1305 may include a storage located apart from the processor 1304. In this case, the processor 1304 may access the memory 1305 via the network interface 1303 or an I/O interface (not illustrated).

The memory 1305 may store one or more software modules (computer programs) 1306 including instructions and data to perform processing by the base station 21 described in the above embodiments. In some implementations, the processor 1304 may be configured to load the software modules 1306 from the memory 1305 and execute the loaded software modules, thereby performing processing of the base station 21 described in the above embodiments.

When the base station 21 is a Central Unit (e.g., gNB-CU) in the C-RAN deployment, the base station 21 does not need to include the RF transceiver 1301 (and the antenna array 1302).

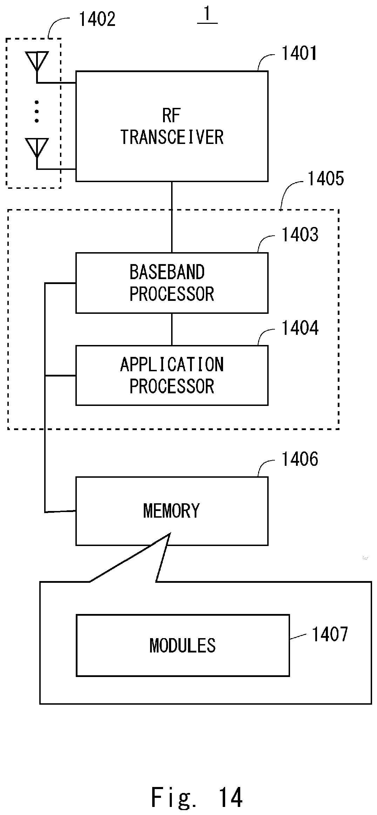

Figure 14 is a block diagram showing a configuration example of the UE 1. A Radio Frequency (RF) transceiver 1401 performs analog RF signal processing to communicate with NG-RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1403 may include processing of Non-Access Stratum (NAS) protocols, Radio Resource Control (RRC) protocols, and MAC Control Elements (CEs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described in the following.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory (not illustrated) and executes these programs, thereby providing various functions of the UE 1.

In some implementations, as represented by a dashed line (1405) in Figure 14, the baseband processor 1403 and the application processor 1404 may be integrated on a single chip. In other words, the baseband processor 1403 and the application processor 1404 may be implemented in a single System on Chip (SoC) device 1405. An SoC device may be referred to as a Large-Scale Integration (LSI) or a chipset.

The memory 1406 is a volatile memory, a non-volatile memory, or a combination thereof. The memory 1406 may include a plurality of memory devices that are physically independent of each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated in the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 1 described in the above embodiments. In some implementations, the baseband processor 1403 or the application processor 1404 may load these software modules 1407 from the memory 1406 and execute the loaded software modules, thereby performing the processing of the UE 1 described in the above embodiments with reference to the drawings.

The control-plane processing and operations performed by the UE 1 described in the above embodiments can be achieved by elements other than the RF transceiver 1401 and the antenna array 1402, i.e., achieved by the memory 1406, which stores the software modules 1407, and one or both of the baseband processor 1403 and the application processor 1404.

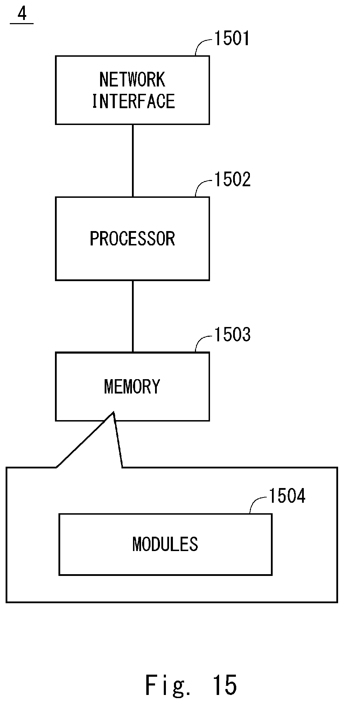

Figure 15 is a block diagram showing a configuration example of the center server 4. The control plane nodes within the 5GC 30 (e.g., AMF 31, SMF 32, PCF 34, and NEF 35) and the station servers 51 and 61 may also have a configuration similar to that shown in Figure 15. Referring to Figure 15, the center server 4 includes a network interface 1501, a processor 1502, and a memory 1503. The network interface 1501 is used to communicate, for example, with the DN 70A and with network functions (NFs) or nodes in the 5GC. The NFs or nodes in the 5GC include, for example, UDM, AUSF, SMF, and PCF. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface (not illustrated).

The memory 1503 may store one or more software modules (computer programs) 1504 including instructions and data to perform the processing of the center server 4 described in the above embodiments. In some implementations, the processor 1502 may be configured to load the one or more software modules 1504 from the memory 1503 and execute the loaded software modules, thereby performing the processing of the center server 4 described in the above embodiments.

As described above with reference to Figures 13, 14 and 15, each of the processors in the UE 1, base stations 21, 22, 52, and 54, control plane nodes (e.g., SMF 32) in the 5GC 30, and center server 4 according to the above embodiments executes one or more programs containing a set of instructions for causing a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

### Other Embodiments

Each of the above embodiments may be used individually, or whole or a part of the embodiments may be appropriately combined with one another.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A radio terminal comprising:
at least one memory; and
at least one processor coupled to the at least one memory, wherein
the at least one processor is configured to determine that the radio terminal is approaching a first station,
the at least one processor is configured to receive from a center server a first cell identifier representing a first cell corresponding to an entrance gate function of the first station,
the at least one processor is configured to transmit a first message containing the first cell identifier to a cellular communication network,
the first message causes the cellular communication network to add the first cell as a secondary cell in dual connectivity for the radio terminal, to enable the radio terminal to communicate with the entrance gate function via a first user plane path that includes a radio connection of the first cell, and
the at least one processor is configured to communicate with the entrance gate function via the first user plane path.

### (Supplementary Note 2)

The radio terminal according to Supplementary Note 1, wherein the at least one processor is configured to determine that a user of the radio terminal is on board based on a change in a movement state of the radio terminal after completing the communication with the entrance gate function.

### (Supplementary Note 3)

The radio terminal according to Supplementary Note 1 or 2, wherein
the at least one processor is configured to determine that a second station is an alighting station,
the at least one processor is configured to receive from the center server a second cell identifier representing a second cell corresponding to an exit gate function of the second station,
the at least one processor is configured to transmit a second message containing the second cell identifier to the cellular communication network,
the second message causes the cellular communication network to add the second cell as a secondary cell in dual connectivity for the radio terminal, to enable the radio terminal to communicate with the exit gate function via a second user plane path that includes a radio connection of the second cell, and
the at least one processor is configured to communicate with the exit gate function via the second user plane path.

### (Supplementary Note 4)

A center server apparatus comprising:
at least one memory; and
at least one processor coupled to the at least one memory, wherein
the at least one processor is configured to determine that a radio terminal is approaching a first station,
the at least one processor is configured to send a first message to the cellular communication network in response to the determination that the radio terminal is approaching the first station,
the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell, and
the at least one processor is configured to receive, from a first station server function associated with the first station, a first data set generated based on communication between the radio terminal and the entrance gate function via the first user plane path.

### (Supplementary Note 5)

The center server apparatus according to Supplementary Note 4, wherein the least one processor is configured to manage entrance gate passage of a user of the radio terminal based on the first data set.

### (Supplementary Note 6)

The center server apparatus according to Supplementary Note 4 or 5, wherein
the at least one processor is configured to receive, after receiving the first data set, a first notification generated based on a change in a movement state of the radio terminal, from said radio terminal, and
the at least one processor is configured to determine, based on the first notification, that a user of the radio terminal is on board.

### (Supplementary Note 7)

The center server apparatus according to any one of Supplementary Notes 4 to 6, wherein
the at least one processor is configured to determine, based on communication with the radio terminal, that a second station is an alighting station of a user of the radio terminal,
the least one processor is configured to send a second message to the cellular communication network in response to the determination of the alighting station,
the second message causes the cellular communication network to add a second cell, corresponding to an exit gate function of the second station, as a secondary cell in dual connectivity for the radio terminal, to enable the radio terminal to communicate with the exit gate function via a second user plane path that includes a radio connection of the second cell, and
the at least one processor is configured to receive, from a second station server function associated with the second station, a second data set generated based on communication between the radio terminal and the exit gate function via the second user plane path.

### (Supplementary Note 8)

The center server apparatus according to Supplementary Note 7, wherein the at least one processor is configured to determine the alighting station based on a notification received from the radio terminal indicating exit from a train at the second station.

### (Supplementary Note 9)

A method performed by a radio terminal, the method comprising:
determining that the radio terminal is approaching a first station:
receiving from a center server a first cell identifier representing a first cell corresponding to an entrance gate function of the first station;
transmitting a first message containing the first cell identifier to a cellular communication network, wherein the first message causes the cellular communication network to add the first cell as a secondary cell in dual connectivity for the radio terminal, to enable the radio terminal to communicate with the entrance gate function via a first user plane path that includes a radio connection of the first cell; and
communicating with the entrance gate function via the first user plane path.

### (Supplementary Note 10)

A method performed by a center server, the method comprising:
determining that a radio terminal is approaching a first station;
sending a first message to the cellular communication network in response to the determination that the radio terminal is approaching the first station, wherein the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell; and
receiving, from a first station server function associated with the first station, a first data set generated based on communication between the radio terminal and the entrance gate function via the first user plane path.

### (Supplementary Note 11)

A program for causing a computer to perform a method for a radio terminal, wherein the method comprises:
determining that the radio terminal is approaching a first station:
receiving from a center server a first cell identifier representing a first cell corresponding to an entrance gate function of the first station;
transmitting a first message containing the first cell identifier to a cellular communication network, wherein the first message causes the cellular communication network to add the first cell as a secondary cell in dual connectivity for the radio terminal, to enable the radio terminal to communicate with the entrance gate function via a first user plane path that includes a radio connection of the first cell; and
communicating with the entrance gate function via the first user plane path.

### (Supplementary Note 12)

A program for causing a computer to perform a method for a center server apparatus, wherein the method comprises:
determining that a radio terminal is approaching a first station;
sending a first message to the cellular communication network in response to the determination that the radio terminal is approaching the first station, wherein the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell; and
receiving, from a first station server function associated with the first station, a first data set generated based on communication between the radio terminal and the entrance gate function via the first user plane path.

This application is based upon and claims the benefit of priority from Japanese Patent Application No. 2020-078447, filed on April 27, 2020, the disclosure of which is incorporated herein in its entirety by reference.

### Reference Signs List

- 1: UE
- 4: Center Server
- 5: Boarding Station
- 6: Alighting Station
- 21, 22: Base Station
- 25, 26: Cell
- 30: 5GC
- 31: AMF
- 32: SMF
- 33A, 33B: UPF
- 34: PCF
- 35: NEF
- 51, 61: Station Server
- 52, 62: Base Station
- 53: Entrance Gate
- 63: Exit Gate
- 54, 64: Cell
- 70A, 70B: DN
- 1305: Memory
- 1306: Modules
- 1403: Baseband Processor
- 1404: Application Processor
- 1407: Modules
- 1503: Memory
- 1504: Modules

## Claims

1. A radio terminal comprising:
at least one memory; and
at least one processor coupled to the at least one memory,
wherein
the at least one processor is configured to determine that the radio terminal is approaching a first station,
the at least one processor is configured to receive from a center server a first cell identifier representing a first cell corresponding to an entrance gate function of the first station,
the at least one processor is configured to transmit a first message containing the first cell identifier to a cellular communication network,
the first message causes the cellular communication network to add the first cell as a secondary cell in dual connectivity for the radio terminal, to enable the radio terminal to communicate with the entrance gate function via a first user plane path that includes a radio connection of the first cell, and
the at least one processor is configured to communicate with the entrance gate function via the first user plane path.

2. The radio terminal according to claim 1, wherein the at least one processor is configured to determine that a user of the radio terminal is on board based on a change in a movement state of the radio terminal after completing the communication with the entrance gate function.

3. The radio terminal according to claim 1 or 2, wherein
the at least one processor is configured to determine that a second station is an alighting station,
the at least one processor is configured to receive from the center server a second cell identifier representing a second cell corresponding to an exit gate function of the second station,
the at least one processor is configured to transmit a second message containing the second cell identifier to the cellular communication network,
the second message causes the cellular communication network to add the second cell as a secondary cell in dual connectivity for the radio terminal, to enable the radio terminal to communicate with the exit gate function via a second user plane path that includes a radio connection of the second cell, and
the at least one processor is configured to communicate with the exit gate function via the second user plane path.

4. A center server apparatus comprising:
at least one memory; and
at least one processor coupled to the at least one memory,
wherein
the at least one processor is configured to determine that a radio terminal is approaching a first station,
the at least one processor is configured to send a first message to a cellular communication network in response to the determination that the radio terminal is approaching the first station,
the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell, and
the at least one processor is configured to receive, from a first station server function associated with the first station, a first data set generated based on communication between the radio terminal and the entrance gate function via the first user plane path.

5. The center server apparatus according to claim 4, wherein the least one processor is configured to manage entrance gate passage of a user of the radio terminal based on the first data set.

6. The center server apparatus according to claim 4 or 5, wherein
the at least one processor is configured to receive, after receiving the first data set, a first notification generated based on a change in a movement state of the radio terminal, from said radio terminal, and
the at least one processor is configured to determine, based on the first notification, that a user of the radio terminal is on board.

7. The center server apparatus according to any one of claims 4 to 6, wherein
the at least one processor is configured to determine, based on communication with the radio terminal, that a second station is an alighting station of a user of the radio terminal,
the least one processor is configured to send a second message to the cellular communication network in response to the determination of the alighting station,
the second message causes the cellular communication network to add a second cell, corresponding to an exit gate function of the second station, as a secondary cell in dual connectivity for the radio terminal, to enable the radio terminal to communicate with the exit gate function via a second user plane path that includes a radio connection of the second cell, and
the at least one processor is configured to receive, from a second station server function associated with the second station, a second data set generated based on communication between the radio terminal and the exit gate function via the second user plane path.

8. The center server apparatus according to claim 7, wherein the at least one processor is configured to determine the alighting station based on a notification received from the radio terminal indicating exit from a train at the second station.

9. A method performed by a radio terminal, the method comprising:
determining that the radio terminal is approaching a first station:
receiving from a center server a first cell identifier representing a first cell corresponding to an entrance gate function of the first station;
transmitting a first message containing the first cell identifier to a cellular communication network, wherein the first message causes the cellular communication network to add the first cell as a secondary cell in dual connectivity for the radio terminal, to enable the radio terminal to communicate with the entrance gate function via a first user plane path that includes a radio connection of the first cell; and
communicating with the entrance gate function via the first user plane path.

10. A method performed by a center server, the method comprising:
determining that a radio terminal is approaching a first station;
sending a first message to a cellular communication network in response to the determination that the radio terminal is approaching the first station, wherein the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell; and
receiving, from a first station server function associated with the first station, a first data set generated based on communication between the radio terminal and the entrance gate function via the first user plane path.

11. A non-transitory computer readable medium storing a program for causing a computer to perform a method for a radio terminal, wherein the method comprises:
determining that the radio terminal is approaching a first station:
receiving from a center server a first cell identifier representing a first cell corresponding to an entrance gate function of the first station;
transmitting a first message containing the first cell identifier to a cellular communication network, wherein the first message causes the cellular communication network to add the first cell as a secondary cell in dual connectivity for the radio terminal, to enable the radio terminal to communicate with the entrance gate function via a first user plane path that includes a radio connection of the first cell; and
communicating with the entrance gate function via the first user plane path.

12. A non-transitory computer readable medium storing a program for causing a computer to perform a method for a center server apparatus, wherein the method comprises:
determining that a radio terminal is approaching a first station;
sending a first message to a cellular communication network in response to the determination that the radio terminal is approaching the first station, wherein the first message causes the cellular communication network to add a first cell, corresponding to an entrance gate function of the first station, as a secondary cell in dual connectivity for the radio terminal, to enable the radio terminal to communicate with the entrance gate function via a first user plane path that includes a radio connection of the first cell; and
receiving, from a first station server function associated with the first station, a first data set generated based on communication between the radio terminal and the entrance gate function via the first user plane path.
